# EUROPEAN PATENT SPECIFICATION

(11) **EP 2 426 426 B1**
(45) Date of publication and mention of the grant of the patent: **27.02.2019**
(21) Application number: 09843977.1
(22) Date of filing: 27.04.2009
(51) Int. Cl.: F24F 12/00, F24F 13/20

(54) **HEAT EXCHANGING VENTILATOR**
WÄRMETAUSCHERVENTILATOR
VENTILATEUR ÉCHANGEUR DE CHALEUR

(43) Date of publication of application: 07.03.2012
(73) Proprietor: Mitsubishi Electric Corporation, Tokyo 100-8310 (JP)
(72) Inventor: YASUE, Noriyuki, Tokyo 100-8310 (JP); AOKI, Hiroki, Tokyo 100-8310 (JP); NARUSE, Yuuhei, Tokyo 102-0073 (JP); FUJII, Yoshinori, Tokyo 102-0073 (JP)
(74) Representative: Pfenning, Meinig & Partner mbB
(86) International application number: PCT/JP2009/058277
(87) International publication number: WO 2010/125633

(56) References cited:
- EP-A1- 1 939 542
- DE-U1-202007 009 487
- JP-A- H10 267 341
- JP-A- 2003 074 936
- JP-A- 2003 074 936

## Description

### Field

The present invention relates to a heat exchanging ventilator in which heat exchange is performed between air supply and exhaust along with air ventilation by means of air supply and exhaust.

Ventilation in houses has become an important issue as houses become highly airtight. Above all, a heat exchanging ventilator has been widely used due to the trend of energy savings. Conventionally, a heat exchanging ventilator having such a structure that an exhaust air path for exhausting indoor air to outside of a room and a supply air path for supplying outdoor air to the room are formed in a box-like main body casing, an exhaust fan is provided in the exhaust air path, an air supply fan is provided in the supply air path, and a heat exchanger is provided at a crossing between the exhaust air path and the supply air path has been known. In such a heat exchanging ventilator, thermal energy is exchanged between air A outside the room and air B inside the room without being mixed with each other (see, for example, Patent Literature 1). Patent JP 2003 074936 A discloses a heat exchanging ventilator according to the preamble of claim 1. Furthermore, a heat exchanging ventilator is known which comprises a passage for exhausting indoor air to the outdoors and a passage for supplying outdoor air to the indoors formed in a body casing, wherein the ventilator comprises an exhaust fan and a supply fan on the downstream side of a heat exchanger (see, for example, Patent Literature 2). Moreover, a ventilating device is known which has parts of reduced size and weight and thus allows an improved maintenance (see, for example, Patent Literature 3). Additionally, a ventilation unit is known which can be switched from an operation with a heat exchanger to an operation without a heat exchanger without the need for bypass lines and switching elements (see, for example, Patent Literature 4). Besides, an air conditioner is known in which air-supply passages cross air-discharge passages and heat exchangers are disposed at intersections between the air-supply passages and the air-discharge passages, wherein the air conditioner can be easily installed and repaired (see, for example, Patent Literature 5).

### Citation List

### Patent Literature

Patent Literature 1: Japanese Patent Application Laid-open No. 2003-074936
Patent Literature 2: JP 2003 074936 A
Patent Literature 3: JP H10 267341 A
Patent Literature 4: DE 20 2007 009487 U1
Patent Literature 5: EP 1 939 542 A1

### Summary

### Technical Problem

The heat exchanging ventilator needs to ensure airtightness so that air in the supply air path and air in the exhaust air path are not mixed, in order to supply outdoor fresh air to the room and exhaust indoor foul air to outside. When airtightness is not sufficiently ensured, an effective ventilation rate decreases due to air leakage in the product enclosure, and reliable ventilation cannot be performed. In the conventional ventilator, an airtight structure of the exhaust air path and the supply air path is respectively provided on the side of a casing for the air supply and exhaust fans with an air inlet provided therein.

Therefore, there is a structural issue such that a gap is likely generated due to size variations or assembly variations of parts. Further, to absorb these size variations and assembly variations, a packing material may be arranged on matching surfaces. In this case, the number of parts increases, an application work of the packing material is required, and assembly properties deteriorate. Therefore, there is a demand for a fan structure that can ensure airtightness reliably even if there are size variations or assembly variations, and there is also a demand for a structure that can ensure airtightness without using the packing material.

It is desired for the fan of the heat exchanging ventilator that exchange of maintenance parts such as a motor is easy. A fan structure of a conventional ventilation fan uses a separate part for holding a heat exchanger so that replacement of parts becomes possible only by partially detaching/attaching a fan structural part from/to a product (when a structure for holding the heat exchanger is provided in the conventional fan structure, the heat exchanger may need to be detached as well at the time of replacing the maintenance parts such as the motor). Therefore, there is a problem that the number of parts of the entire product increases, thereby causing a cost increase. Further, an increase in the number of parts causes an increase of joint parts, thereby causing a problem of airtightness.

In view of the above problems, a heat exchanging ventilator that can reduce product cost by reducing the number of parts, has excellent airtightness, excellent workability for replacing maintenance parts such as a motor, and excellent maintainability has been conventionally desired.

The present invention has been achieved to solve the above problems, and an object of the present invention is to provide a heat exchanging ventilator that can improve airtightness and maintainability and can reduce the number of parts.

### Solution to Problem

In order to solve above-mentioned problems and to achieve the object, a heat exchanging ventilator according to the present invention including an exhaust air path for exhausting indoor air to outside of a room and a supply air path for supplying outdoor air to the room, which are formed in a box-like main body casing, an exhaust fan provided in the exhaust air path, an air supply fan provided in the supply air path, and a heat exchanger provided at a crossing between the exhaust air path and the supply air path to perform heat exchange, wherein the air supply fan and the exhaust fan respectively have a motor built therein, an outer shell thereof being covered with a casing having the same shape, and are arranged in such a manner that rotation shafts of respective motors are parallel to each other and face opposite directions, and a part of an outer circumference of the casings respectively forms the exhaust air path and the supply air path, the casing for the exhaust fan and the casing for the air supply fan are respectively divided into a first casing and a second casing in a first direction (a direction of the rotation shaft) on a division surface orthogonal to the rotation shaft of the motor, the first casing for the exhaust fan and the first casing for the air supply fan have the same shape and so do the second casing for the exhaust fan and the second casing for the air supply fan, the second casing for the exhaust fan and the second casing for the air supply fan are respectively provided with a projection extending outward from a divided opening edge along the division surface, and the projection provided on the second casing for the air supply fan and the projection provided on the second casing for the exhaust fan are superposed over each other with principal surfaces opposite to each other in the first direction in surface contact with each other, to separate the supply air path and the exhaust air path.

### Advantageous Effects of Invention

According to the heat exchanging ventilator of the present invention, the number of parts can be reduced, and particularly the number of molds for molding a casing can be reduced, thereby enabling to achieve cost reduction. Airtightness can be ensured and the number of parts can be reduced, without using any packing material in portions constituting an air supply fan, an exhaust fan, and an air path between the air supply fan and the exhaust fan. At the time of replacing the maintenance parts such as a motor, because replacement work can be performed without detaching the packing material, workability is improved.

### Brief Description of Drawings

FIG. 1 is a plan view for explaining an air flow and a distribution channel in a heat exchanging ventilator.
FIG. 2 is an exploded perspective view for explaining an internal structure of the heat exchanging ventilator.
FIG. 3 is an exploded perspective view of an air supply fan in a heat exchanging ventilator according to an embodiment of the present invention.
FIG. 4 is a perspective view of details of respectively divided casings of an air supply fan and of an exhaust fan.
FIG. 5 is a side sectional view of a motor shaft of the heat exchanging ventilator according to the embodiment of the present invention.
FIG. 6 is an enlarged view of a part C in FIG. 5.
FIG. 7 is a perspective view of suction casings of the air supply fan and the exhaust fan as viewed from inside of the casing.
FIG. 8 is a perspective view of suction casings of the air supply fan and the exhaust fan as viewed from outside of the casing.
FIG. 9 is a perspective view of motor casings of the air supply fan and the exhaust fan as viewed from inside of the casing.
FIG. 10 is a perspective view of motor casings of the air supply fan and the exhaust fan as viewed from outside of the casing.
FIG. 11 is a side sectional view on a surface passing through between the air supply fan and the exhaust fan of the heat exchanging ventilator.
FIG. 12 is an enlarged view of a part D in FIG. 11.

### Description of Embodiments

Exemplary embodiments of a heat exchanging ventilator according to the present invention will be explained below in detail with reference to the accompanying drawings. The present invention is not limited to the embodiments.

### Embodiment

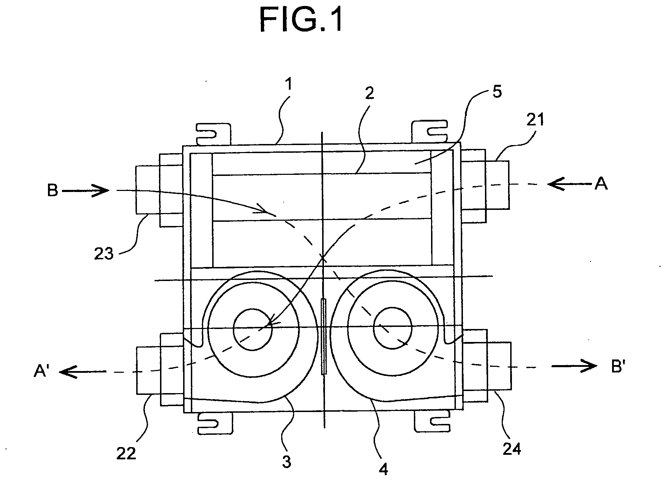

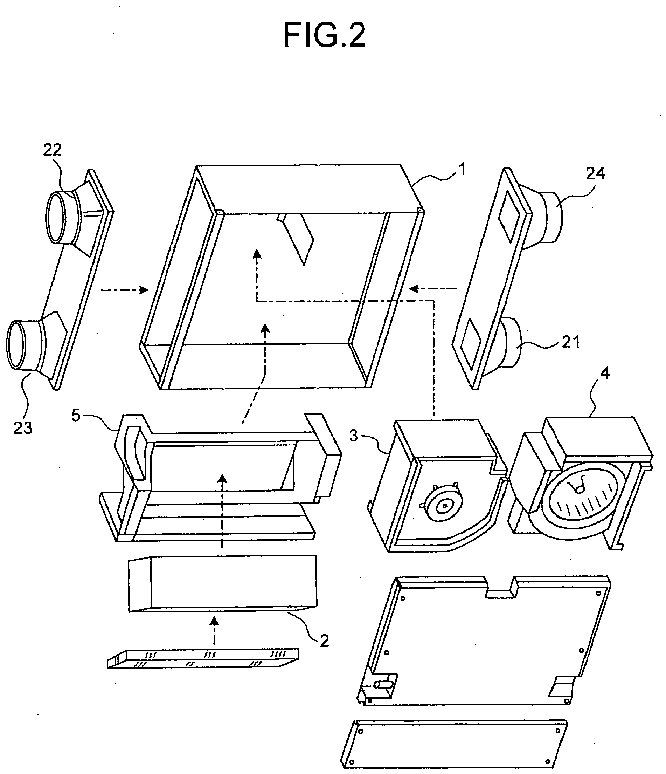

FIG. 1 is a plan view for explaining an air flow and a distribution channel in a heat exchanging ventilator. FIG. 2 is an exploded perspective view for explaining an internal structure of the heat exchanging ventilator. FIG. 2 explains a function and an outline of a configuration of the heat exchanging ventilator and depicts a conventional heat exchanging ventilator described in Patent Literature 1, for example. However, in FIG. 2, the heat exchanging ventilator according to the present invention has a different structure of a casing for an air supply fan 3 and an exhaust fan 4, and a different support structure of a heat exchanger 2 including a heat-exchanger fixing part 5. The structure of other parts is substantially the same as that of the heat exchanging ventilator shown in FIG. 2.

In FIG. 1, an arrow A-A' indicates a flow of supply air or a supply air path, and an arrow B-B' indicates a flow of exhaust air or an exhaust air path. The heat exchanging ventilator includes an exhaust air path for exhausting indoor air to outside of the room and a supply air path for supplying outdoor air to the room formed in a box-like main body casing 1, an exhaust fan 4 provided in the exhaust air path, the air supply fan 3 provided in the supply air path, and a heat exchanger 2 provided at a crossing between the exhaust air path and the supply air path to perform heat exchange.

When the heat exchanging ventilator is driven, as shown by the arrow B-B' in FIG. 1, indoor air is sucked from an exhaust inlet 23 by the exhaust fan 4, and flows into the heat exchanger 2 from the surface of the heat exchanger 2 on an inflow side of an upward exhaust flow, and passes through the heat exchanger 2 downward to accumulate heat included in indoor air in the heat exchanger 2. Air flows out from an outflow surface at a lower part of the heat exchanger 2, as shown in FIG. 1, passes through the exhaust fan 4, and is exhausted to outside of the room from an exhaust outlet 24.

On the other hand, outdoor air is sucked from an air-supply inlet 21 by the air supply fan 3, as shown by the arrow A-A' in FIG. 1. After dust is removed by a filter (not shown) fitted to a surface of the heat exchanger 2 on an inflow side of a downward air supply flow, air flows into the heat exchanger 2, and passes through the heat exchanger 2 upward to collect heat accumulated in the heat exchanger 2. Air flows out from an outflow surface at an upper part of the heat exchanger 2 as shown in FIG. 1, passes through the air supply fan 3, and is supplied into the room from a supply air outlet 22. In the heat exchanging ventilator having such a configuration, thermal energy is exchanged between the air A outside the room and the air B inside the room, without being mixed with each other.

Outer shells of the air supply fan 3 and the exhaust fan 4 are covered with a casing, with a motor respectively incorporated therein. The air supply fan 3 and the exhaust fan 4 are arranged in parallel in the main body casing 1 so that rotation shafts of the respective motors are parallel to each other and directed to opposite directions. Outer peripheries of the air supply fan 3 and the exhaust fan 4 constitute the supply air path and the exhaust air path. Therefore, the casing for the air supply fan 3 and the casing for the exhaust fan 4 are connected airtightly with each other. Conventionally, the sides of the casing for the air supply fan 3 and the casing for the exhaust fan 4 have been attached tightly to each other to maintain airtightness. Therefore, a gap may be generated or a packing material has been required for preventing generation of the gap. The heat exchanger 2 is fixed to the main body casing 1 by the heat-exchanger fixing part 5 having a large size and a complicated structure shown in FIG. 2.

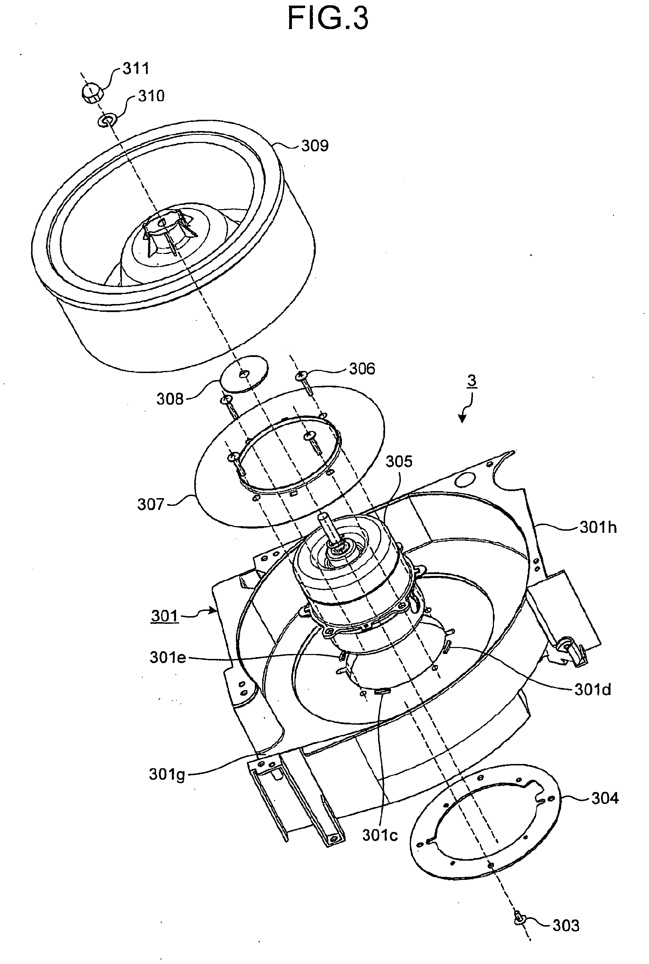

FIG. 3 is an exploded perspective view of the air supply fan 3 in the heat exchanging ventilator according to an embodiment of the present invention. Constituent parts and an internal structure of the air supply fan 3 are explained with reference to FIG. 3. In the present embodiment, a motor casing 301 of the air supply fan 3 and a motor casing 401 of the exhaust fan 4 have the same shape. The constituent parts and the internal structures of the air supply fan 3 and the exhaust fan 4 including these motor casings 301 and 401 are the same. That is, the constituent parts and the internal structure of the air supply fan 3 are explained here; however, the exhaust fan 4 has the same configuration.

The air supply fan 3 (the exhaust fan 4) is a so-called Sirocco fan having a cylindrical blade 309 of a multiblade fan on a rotation shaft of a motor 305. A motor mounting plate 304 is fixed to the motor casing 301 by a screw 303. The motor 305 is inserted from a central hole of the motor casing 301 and fastened to the motor mounting plate 304 by a screw 306. The blade 309 is inserted into the rotation shaft of the motor 305 via a washer 308 and fixed by a locknut 311 via a spring washer 310.

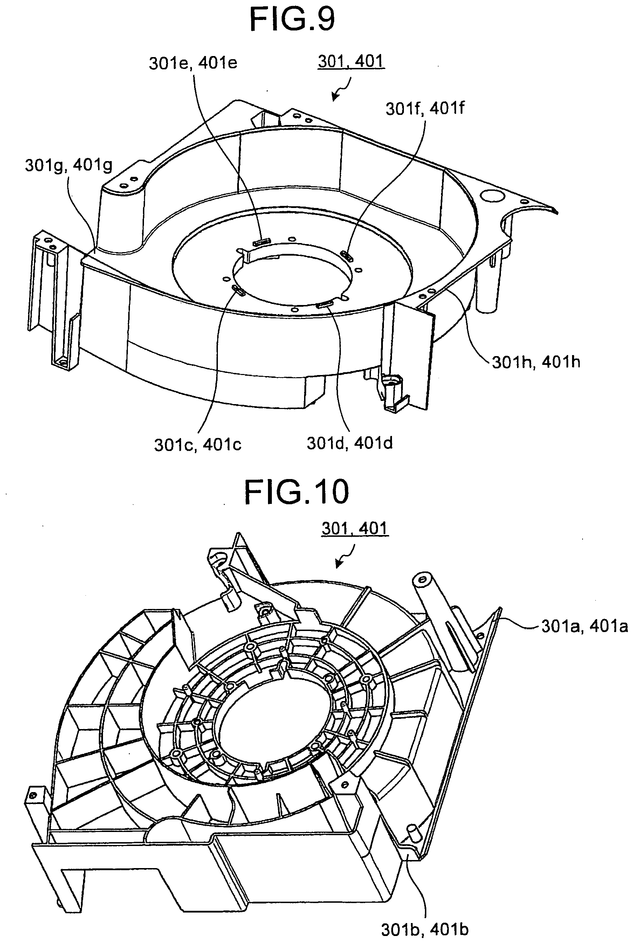

A motor positioning structure is explained next. The motor casing 301 includes a motor positioning ribs 301c, 301d, 301e, and 301f (FIG. 9). These motor positioning ribs 301c, 301d, 301e, and 301f are provided at four positions with equal distance from the center of the fan, and are designed with a size such that there is no interference even if a diameter of a motor mounting surface is manufactured with a maximum tolerance. The motor casing 401 for the exhaust fan 4 has the same configuration.

In the heat exchanging ventilator according to the present embodiment, the casing for the air supply fan 3 includes the motor casing 301 and an suction casing 302 halved in a direction of the rotation shaft of the motor. Likewise, the casing for the exhaust fan 4 includes the motor casing 401 and a suction casing 402 halved in the direction of the rotation shaft of the motor. The air supply fan 3 and the exhaust fan 4 are arranged in parallel in the main body casing 1 so that the rotation shafts of the respective motors are parallel to each other and directed to opposite directions, as in the conventional one shown in FIG. 2.

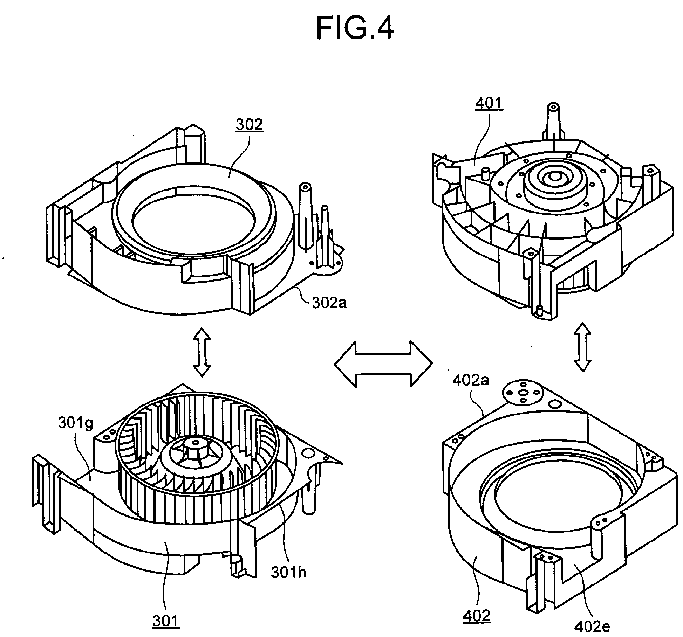

FIG. 4 is a perspective view of details of the respectively divided casings of the air supply fan 3 and of the exhaust fan 4 according to the embodiment of the present invention. The casing for the air supply fan 3 includes the motor casing 301 and the suction casing 302 halved in the direction of the rotation shaft on a division surface orthogonal to the rotation shaft of the motor (not shown). The casing for the exhaust fan 4 also includes the motor casing 401 and the suction casing 402 halved in the direction of the rotation shaft on a surface orthogonal to the rotation shaft of the motor (not shown). The motor casing for the air supply fan 3 (hereinafter, "air-supply motor casing") 301 and the motor casing for the exhaust fan 4 (hereinafter, "exhaust motor casing") 401 have the same shape. The suction casing for the air supply fan 3 (hereinafter, "air-supply suction casing") 302 and the suction casing for the exhaust fan 4 (hereinafter, "exhaust suction casing") 402 have the same shape.

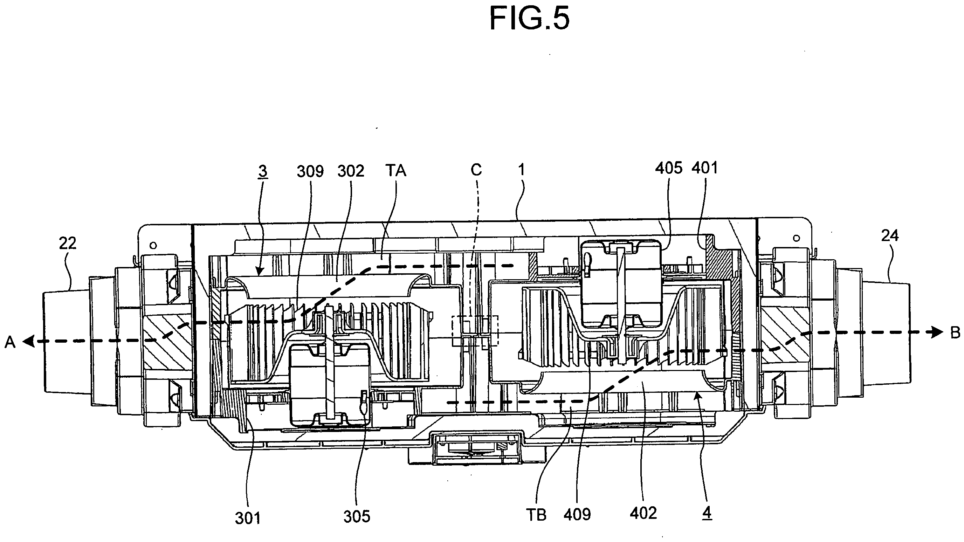

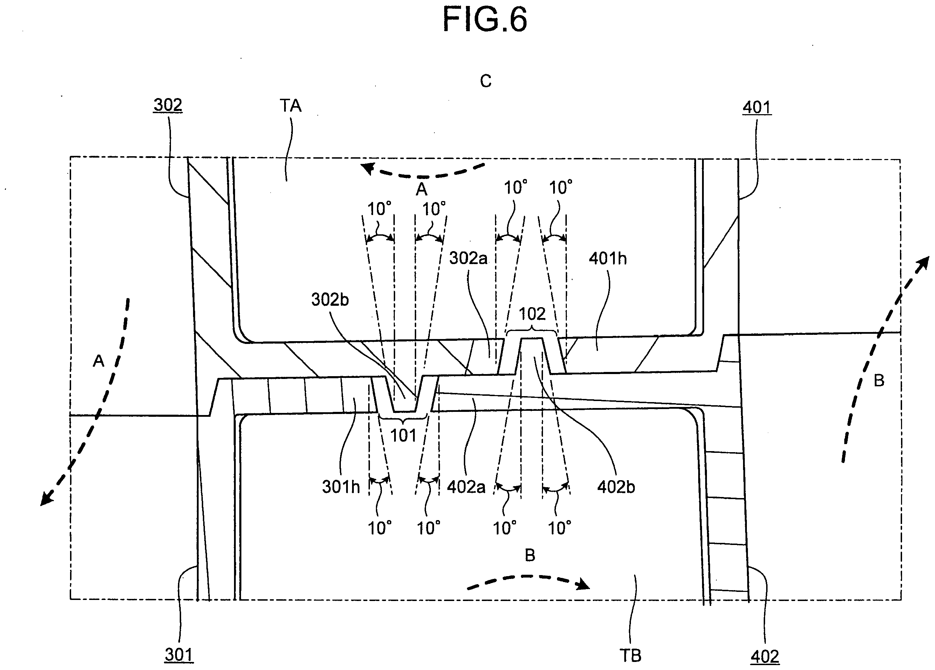

FIG. 5 is a side sectional view of the motor shaft of the heat exchanging ventilator according to the embodiment of the present invention. FIG. 6 is an enlarged view of a part C in FIG. 5. A position relation between the air supply fan 3 and the exhaust fan 4 in an incorporation completion state is explained with reference to FIG. 5. The air supply fan 3 and the exhaust fan 4 are arranged in the main body casing 1 so that the rotation shafts of the respective motors are parallel to each other and directed to opposite directions. The air supply fan 3 and the exhaust fan 4 are arranged so that the division surfaces of the respective casings agree with the center of the main body casing 1 in a thickness direction (the respective casings of the air supply fan 3 and the exhaust fan 4 are divided in a central part of the main body casing 1 in the thickness direction).

As shown in FIG. 6, a female faucet joint structure is formed, in which a slope face that narrows a hole diameter inward is formed over the whole circumference on an inner surface of a divided opening edge of the air-supply motor casing 301. On the other hand, a male faucet joint structure is formed, in which a slope face that narrows an outer diameter toward an end is formed over the whole circumference on an outer surface of a divided opening edge of the air-supply suction casing 302. The both casings are combined with the respective faucet joint structures being faucet-jointed. The same thing applies to the divided opening edge between the exhaust motor casing 401 and the exhaust suction casing 402.

The air supply fan 3 and the exhaust fan 4 installed in parallel in the main body casing 1 form the supply air path and the exhaust air path in the main body casing 1 by halving the space in the main body casing 1 (in FIG. 5, a supply air path TA is formed in an upper part in FIG. 5 and an exhaust air path TB is formed in a lower part in FIG. 5). After exchange of thermal energy is performed by the heat exchanger 2, the air B inside the room passes through the exhaust air path TB, is sucked by the exhaust fan 4, and is exhausted to outside from the exhaust outlet 24. After exchange of thermal energy is performed by the heat exchanger 2, the air A outside the room passes through the supply air path TA, is sucked by the air supply fan 3, and is supplied into the room from the supply air outlet 22.

The air-supply suction casing 302 and the exhaust motor casing 401 are fixed to the main body casing by screws. At this time, the air-supply suction casing 302 and the exhaust motor casing 401 are fixed at such positions that a predetermined clearance (gap) is formed between the adjacent casings 302 and 401. The air-supply motor casing 301 is also fixed to the air-supply suction casing 302 by screws. The exhaust suction casing 402 is fixed to the exhaust motor casing 401. Because the respective casings are fixed in this manner, the clearance between the air-supply motor casing 301 and the exhaust suction casing 402 has the same size as the clearance between the air-supply suction casing 302 and the exhaust motor casing 401.

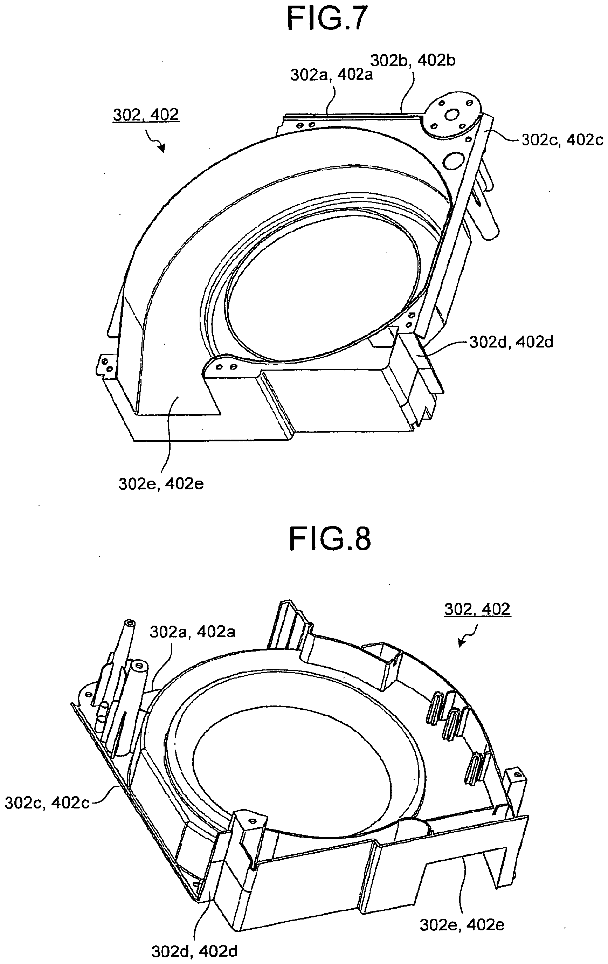

FIG. 7 is a perspective view of the suction casings of the air supply fan and the exhaust fan as viewed from inside of the casing. FIG. 8 is a perspective view of the suction casings of the air supply fan and the exhaust fan as viewed from outside of the casing. FIG. 9 is a perspective view of the motor casings of the air supply fan and the exhaust fan as viewed from inside of the casing. FIG. 10 is a perspective view of the motor casings of the air supply fan and the exhaust fan as viewed from outside of the casing.

FIGS. 5 to 10 depict projections provided on the respective casings and a situation in which the projections superpose over each other. A projection 302a extending outward from the divided opening edge formed on a cut surface cut by division along the division surface is provided on the air-supply suction casing 302 on a side opposite to a supply opening 302e (FIGS. 7 and 8). Also a projection 301h ("second projection") extending outward from the divided opening edge along the division surface is provided on the air-supply motor casing 301 on a side opposite to a supply opening 301g (FIG. 9). The projections 302a and 301h are superposed over each other with principal surfaces opposite to each other in an axial direction of the rotation shaft of the motor (referred to as a first direction) in surface contact (surface-to-surface contact) with each other (FIG. 6). Likewise, a projection 402a extending outward from the divided opening edge along the division surface is provided on the exhaust suction casing 402 (FIGS. 7 and 8). A projection 401h ("second projection") extending outward from the divided opening edge along the division surface is also provided on the exhaust motor casing 401 (FIG. 9). The projections 402a and 401h are superposed over each other with principal surfaces opposite to each other in the first direction in surface contact (surface-to-surface contact) with each other (FIG. 6). The projections 302a and 301h, and the projections 402a and 401h respectively extend in a direction vertical to the page in FIGS. 5 and 6 at the ends of the casings 302, 301, 402, and 401.

The projection 302a provided on the air-supply suction casing 302 is wider than the projection 301h provided on the air-supply motor casing 301 and projects long from the divided opening edge. That is, the projection 302a extends and protrudes further outward with respect to the projection 301h (FIG. 6). Likewise, the projection 402a extends and protrudes further outward with respect to the projection 401h (FIG. 6). The projections 302a and 402a extending and protruding outward are superposed over each other with principal surfaces opposite to each other in the first direction in surface contact (surface-to-surface contact) with each other, in a portion extending and protruding outward (FIG. 6).

As shown in FIGS. 5 and 6, the space in the main body casing 1 separated by the projections 302a and 402a becomes the supply air path TA and the exhaust air path TB. In the air supply fan 3 and the exhaust fan 4, because the supply air path TA and the exhaust air path TB are separated by the projections 302a and 402a in surface contact (surface-to-surface contact) with each other of the respective casings, airtightness is reliably maintained without any packing material.

Furthermore, in FIG. 6, the projection 301h provided on the air-supply motor casing 301 and the projection 402a provided on the exhaust suction casing 402 abut against each other with a first clearance (gap) 101. A protrusion 302b provided in an extended condition on the principal surface of the projection 302a is fitted to the first clearance (gap) 101. Likewise, the projection 401h provided on the exhaust motor casing 401 and the projection 302a provided on the air-supply suction casing 302 abut against each other with a second clearance (gap) 102, and a protrusion 402b provided in an extended condition on the principal surface of the projection 402a is fitted to the second clearance (gap) 102. The first clearance (gap) 101, the second clearance (gap) 102, and the protrusions 302b and 402b extend in the direction vertical to the page in FIGS. 5 and 6 at the ends of the casings 302, 301, 402, and 401 as in the projections 302a, 301h, 402a, and 401h. According to this configuration, airtightness between the supply air path TA and the exhaust air path TB is maintained more reliably.

The first clearance (gap) 101 is designed with a size relation such that the protrusion 402b of the exhaust suction casing 402 fitted thereto does not interfere with the first clearance, even if there are molding variations of the air-supply suction casing 302 and the exhaust motor casing 401, and assembly variations of the air-supply suction casing 302 and the exhaust motor casing 401 with the body.

The second clearance (gap) 102 is designed with a size relation such that the protrusion 302b of the air-supply suction casing 302 fitted thereto does not interfere with the second clearance, even if there are molding variations of the exhaust suction casing 402 and the air-supply motor casing 301, assembly variations of the exhaust suction casing 402 with the exhaust motor casing 401, and assembly variations of the air-supply motor casing 301 with the air-supply suction casing 302.

Matching position of the air supply fan 3 and the exhaust fan 4 in a product assembled state is explained with reference to FIG. 5. The fan is assembled in a state with the main body casing 1 vertically inverted. The air-supply suction casing 302 and the exhaust motor casing 401 are assembled to the main body casing 1. An assembling order of the air-supply suction casing 302 and the exhaust motor casing 401 is arbitrary. The air-supply motor casing 301 and the exhaust suction casing 402 are assembled next. An assembling order of the air-supply motor casing 301 and the exhaust suction casing 402 is arbitrary. In the product assembled state, the projection 302a of the air-supply suction casing 302 and the projection 402a of the exhaust suction casing 402 are in surface-to-surface contact with each other on the division surface of the fan. portion extending and protruding outward (FIG. 6).

The protrusion 302b of the air-supply suction casing 302 is explained with reference to FIG. 6. The protrusion 302b is formed in a trapezoidal shape (or may be in a wedge shape in cross section) with a cross section thereof being tapered and with a gradient of about 10 degrees on the side, so that the protrusion 302b can be easily fitted into the clearance 101 even if the clearance (gap) 101 between the air-supply motor casing 301 and the exhaust suction casing 402 changes due to molding variations and assembly variations. The height of the protrusion 302b is equal to the thickness of the exhaust motor casing 401. The same thing applies to the protrusion 402b of the exhaust suction casing 402.

For the same purpose, end faces at the tip of the projections 402a and 301h abutting against each other are formed with a gradient of about 10 degrees so that a width of the clearance becomes wide on the side in which the protrusion 302b is inserted, so that the protrusion 302b can be easily fitted into the clearance 101 even if the clearance (gap) 101 between the air-supply motor casing 301 and the exhaust suction casing 402_changes due to molding variations and assembly variations. Also for the same purpose, end faces at the tip of the projections 302a and 401h abutting against each other are formed with a gradient of about 10 degrees. An inclination angle of the end faces at the tip can be further increased. However, if the end faces are inclined largely, one side of the end face forms an acute angle. Therefore, the angle is set to about 10 degrees in order to prevent that an edge of the end face damages a worker or the like.

As described above, according to the heat exchanging ventilator of the present embodiment, the casing for the exhaust fan 4 and the casing for the air supply fan 3 are divided into the motor casings 301 and 401 and the suction casings 302 and 402 in the first direction (in the direction of rotation axis) on the division surface orthogonal to the rotation shaft of the motor 305. The air-supply motor casing 301 and the exhaust motor casing 401 have the same shape, and the air-supply suction casing 302 and the exhaust suction casing 402 have the same shape.

The projections 301h, 302a, 401h, and 402a extending outward from the divided opening edge along the division surface are provided on the respective casings 301, 302, 401, and 402. The projection 301h provided on the air-supply motor casing 301 and the projection 302a provided on the air-supply suction casing 302 are superposed over each other with principal surfaces opposite to each other in the first direction in surface contact with each other, and the projection 401h provided on the exhaust motor casing 401 and the projection 402a provided on the exhaust suction casing 402 are superposed over each other with principal surfaces opposite to each other in the first direction in surface contact with each other.

The projections 302a and 402a provided on the air-supply suction casing 302 and the exhaust suction casing 402 extend and protrude outward further than the projections 301h and 401h provided on the air-supply motor casing 301 and the exhaust motor casing 401, and the projection 302a provided on the air-supply suction casing 302 and the projection 402a provided on the exhaust suction casing 402 are superposed over each other with principal surfaces in surface contact (surface-to-surface contact) with each other in the portion extending and protruding outward. Because the superposed projections 302a and 402a separate the supply air path TA and the exhaust air path TB, airtightness can be reliably maintained without any packing material.

The projection 301h provided on the air-supply motor casing 301 and the projection 402a provided on the exhaust suction casing 402 abut against each other with the first clearance 101, and the protrusion 302b provided on the principal surface of the projection 302a provided on the air-supply suction casing 302 is fitted to the first clearance 101. The projection 401h provided on the exhaust motor casing 401 and the projection 302a provided on the air-supply suction casing 302 abut against each other with a second clearance 102, and the protrusion 402b provided on the principal surface of the projection 402a provided on the exhaust suction casing 402 is fitted to the second clearance 102. Accordingly, even if there are size variations and assembly variations in the respective casings, airtightness is maintained reliably and stably by the effects of a surface-to-surface structure and fitting of protrusions.

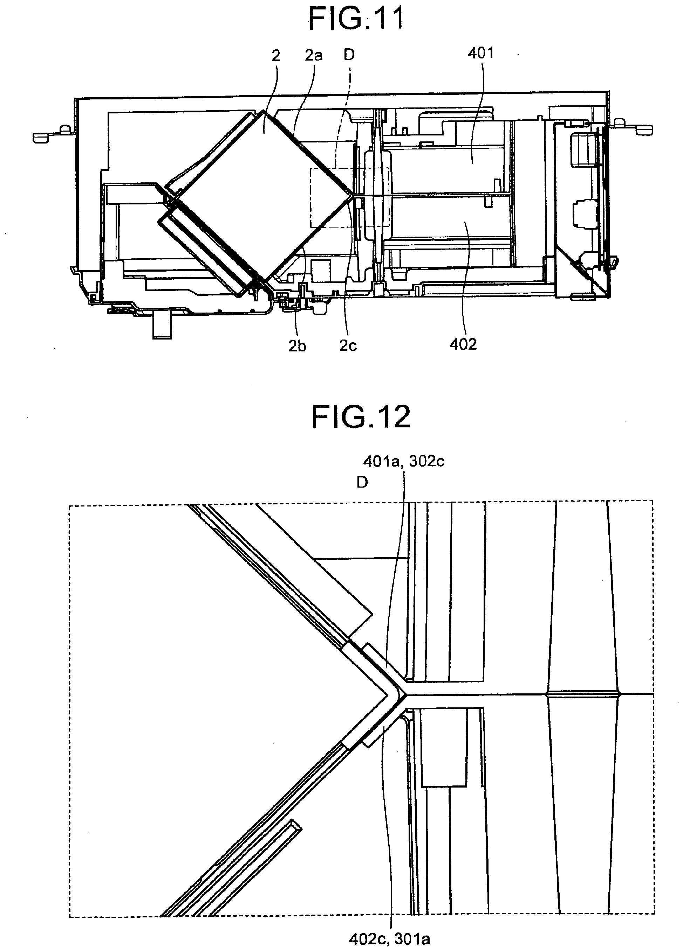

FIG. 11 is a side sectional view on a surface passing through between the air supply fan and the exhaust fan of the heat exchanging ventilator. FIG. 12 is an enlarged view of a part D in FIG. 11. A holding structure of the heat exchanger 2 is explained with reference to FIGS. 6 to 11. A rib 302c inclined by 45 degrees with respect to the motor shaft in cross section is provided substantially over the whole length on one side, which becomes the heat exchanger 2 side, in an assembled state of the air-supply suction casing 302 to the main body casing 1 (FIGS. 7, 8, and 12). A reinforcing rib 302d vertically connected thereto is provided at one end of the rib 302c for improving strength (FIG. 7). A rib 301a inclined by 45 degrees in the opposite direction to the rib 302c is provided on one side of the air-supply motor casing 301 on the heat exchanger 2 side (FIGS. 10 and 12). A reinforcing rib 301b vertically connected thereto is provided at one end of the rib 301a for improving strength (FIG. 10).

Likewise, a rib 402c and a reinforcing rib 402d are provided on the exhaust suction casing 402, and a rib 401a and a reinforcing rib 401b are provided on the exhaust motor casing 401. The lengths of the ribs 302c, 301a, 401a, and 402c are designed to a length with which the heat exchanger 2 can be reliably held and an area blocking the air path of the heat exchanger 2 becomes minimum. In the incorporation completion state, the ribs 302c and 301a, and the ribs 402c and 401a form a 90-degree V-shape structure of +45 degrees and -45 degrees with respect to the direction of the motor shaft to fix a sharp corner 2c formed by two sides 2a and 2b of the heat exchanger 2.

According to the heat exchanging ventilator of the present embodiment, the ribs (first ribs) 401a and 302c projecting substantially over the whole length is formed inclined by 45 degrees at the end of the exhaust motor casing 401 and the air-supply suction casing 302 on the heat exchanger 2 side, and ribs (second ribs) 402c, 301a projecting substantially over the whole length is formed, which are inclined by 45 degrees at the end of the exhaust suction casing 402 and the air-supply motor casing 301 on the heat exchanger 2 side, and opened by 90 degrees with respect to the ribs (first ribs) 401a and 302c. The exhaust fan 4 and the air supply fan 3 support one side of the heat exchanger 2, which forms a substantially rectangular solid, by sandwiching the side between the ribs 401a and 302c and the ribs 402c and 301a. Therefore, a structure for supporting the heat exchanger 2 need not be newly provided on the air supply fan 3 side and the exhaust fan 4 side, and a heat-exchanger fixing part 5 can be simplified than the conventional heat-exchanger fixing part.

According to the heat exchanging ventilator of the present embodiment, when a maintenance part such as the motor is to be replaced, the motor can be replaced only by detaching the casing on the near side of the fan to be replaced (at the time of replacing the motor 305 of the air supply fan 3, the motor 305 can be replaced by detaching the air-supply motor casing 301, and at the time of replacing a motor 405 of the exhaust fan 4, the motor 405 can be replaced by detaching the exhaust suction casing 402) .

Because airtightness can be ensured without using a packing material in a portion constituting the air supply fan 3, the exhaust fan 4, and the air paths thereof, the number of parts can be reduced, and an operation is possible without detaching the packing material at the time of replacing the maintenance part such as the motor, thereby improving workability.

Because another part for holding the heat exchanger is not required, workability and assemblability are improved by decreasing the number of parts. Further, joint parts can be decreased by decreasing the number of parts, to improve airtightness. The entire size of the product can be decreased by decreasing the number of parts.

### Industrial Applicability

As described above, the heat exchanging ventilator according to the present invention is preferably applied to a ventilator including an exhaust air path for exhausting indoor air to outside of the room and a supply formed in a main body casing, an exhaust fan provided in the exhaust air path, an air supply fan provided in the supply air path, and a heat exchanger provided at a crossing between the exhaust air path and the supply air path to perform heat exchange.

### Reference Signs List

- 1: MAIN BODY CASING

- 2: HEAT EXCHANGER
- 21: AIR-SUPPLY INLET
- 22: SUPPLY AIR OUTLET
- 23: EXHAUST INLET
- 24: EXHAUST OUTLET
- 3: AIR SUPPLY FAN
- 4: EXHAUST FAN
- 5: HEAT-EXCHANGER FIXING PART
- 301: MOTOR CASING OF AIR SUPPLY FAN (FIRST CASING)
- 302c, 401a: FIRST RIB
- 301b, 401b: REINFORCING RIB
- 301c to 301f, 401c to 401f: MOTOR POSITIONING RIB
- 301g, 401g: SUPPLY OPENING
- 301h, 401h: PROJECTION ("SECOND PROJECTION")
- 302: SUCTION CASING FOR AIR SUPPLY FAN (SECOND CASING)
- 302a, 402a: PROJECTION
- 302b, 402b: PROTRUSION
- 301a, 402c: SECOND RIB
- 302d, 402d: REINFORCING RIB
- 302e, 402e: SUPPLY OPENING
- 303, 306: SCREW
- 304: MOTOR MOUNTING PLATE
- 305, 405: MOTOR
- 309, 409: BLADE
- 310: SPRING WASHER
- 311: LOCKNUT
- 311: LOCKNUT
- 401: MOTOR CASING OF EXHAUST FAN (FIRST CASING)
- 402: SUCTION CASING FOR EXHAUST FAN (SECOND CASING)

## Claims

1. A heat exchanging ventilator including an exhaust air path for exhausting indoor air to outside of a room and a supply air path for supplying outdoor air to the room, which are formed in a box-like main body casing (1), an exhaust fan (4) provided in the exhaust air path, an air supply fan (3) provided in the supply air path, and a heat exchanger (2) provided at a crossing between the exhaust air path and the supply air path to perform heat exchange, wherein
the air supply fan (3) and the exhaust fan (4) respectively have a motor (305, 405) built therein, an outer shell thereof being covered with a casing having the same shape, and are arranged in such a manner that rotation shafts of respective motors are parallel to each other and face opposite directions, and a part of an outer circumference of the casings respectively forms the exhaust air path and the supply air path, the casing for the exhaust fan (4) and the casing for the air supply fan (3) are respectively divided into a first casing (301,401) and a second casing (302,402) in a first direction (a direction of the rotation shaft) on a division surface orthogonal to the rotation shaft of the motor,
the first casing (401) for the exhaust fan (4) and the first casing (301) for the air supply fan (3) have the same shape and so do the second casing (402) for the exhaust fan (4) and the second casing (302) for the air supply fan (3),
**characterized in that**
the second casing (402) for the exhaust fan (4) and the second casing (302) for the air supply fan (3) are respectively provided with a projection (302a, 402a) extending outward from a divided opening edge along the division surface, and
the projection (302a) provided on the second casing (302) for the air supply fan (3) and the projection (402a) provided on the second casing (402) for the exhaust fan (4) are superposed over each other with principal surfaces opposite to each other in the first direction in surface contact with each other, to separate the supply air path and the exhaust air path.

2. The heat exchanging ventilator according to claim 1, wherein
a second projection (301h,401h) extending outward from the divided opening edge along the division surface is respectively provided on the first casing (401) for the exhaust fan (4) and the first casing (301) for the air supply fan (3),
the second projections (301h,401h) provided on the first casings (301,401) of the exhaust fan (4) and the air supply fan (3) and the projections (302a, 402a) provided on the second casings (302,402) thereof are superposed over each other with principal surfaces opposite to each other in the first direction in surface contact with each other,
the projections (302a,402a) provided on the second casings (302,402) of the exhaust fan (4) and the air supply fan (3) extend and protrude outward further than the second projections (301h,401h) provided on the first casings (301,401), and
the projection (302a) provided on the second casing (302) for the air supply fan (3) and the projection (402a) provided on the second casing (402) for the exhaust fan (4) are superposed over each other with the principal surfaces in surface contact with each other in the portion extending and protruding outward.

3. The heat exchanging ventilator according to claim 2, wherein
the second projection (301h) provided on the first casing (301) for the air supply fan (3) and the projection (402a) provided on the second casing (402) for the exhaust fan (4) abut against each other with a first clearance in a direction of a division surface, and a protrusion (302b) provided on the principal surface of the projection (302a) provided on the second casing (302) for the air supply fan (3) is fitted to the first clearance, and
the second projection (401h) provided on the first casing (401) for the exhaust fan (4) and the projection (302a) provided on the second casing (302) for the air supply fan (3) abut against each other with a second clearance in the direction of the division surface, and a protrusion (402b) provided on the principal surface of the projection (402a) provided on the second casing (402) for the exhaust fan (4) is fitted to the second clearance.

4. The heat exchanging ventilator according to claim 1, wherein the air supply fan (3) and the exhaust fan (4) are respectively a fan having a cylindrical blade of a multiblade fan on the rotation shaft of the motor, and
the first casing (301,401)is a motor casing on which a fixation structure of the motor is provided, and the second casing (302,402) is a suction casing with an air suction port formed on the blade side.

5. The heat exchanging ventilator according to claim 1, wherein
a first rib (401a,302c) projecting substantially over the whole length is formed inclined by 45 degrees at ends of the first casing (401) for the exhaust fan (4) and of the second casing (302) for the air supply fan (3) on the heat exchanger side,
a second rib (402c,301a) projecting substantially over the whole length is formed, which is inclined by 45 degrees at the ends of the second casing (402) for the exhaust fan (4) and of the first casing (301) for the air supply fan (3) on the heat exchanger side, and opens by 90 degrees with respect to the first rib (401a,302c), and
the exhaust fan (4) and the air supply fan (3) support one side of the heat exchanger formed substantially in a rectangular solid, by sandwiching the side between the first rib (401a,302c) and the second rib (402c,301a).

## Patentansprüche

1. Wärmetauscherventilator, der Folgendes beinhaltet:
einen Abluftpfad zum Abgeben von Innenluft an die Außenseite eines Raums und einen Zuluftpfad zum Zuführen von Außenluft in den Raum, die in einem kastenähnlichen Hauptkörpergehäuse (1) ausgebildet sind, ein Abluftgebläse (4), das in dem Abluftpfad bereitgestellt ist, ein Zuluftgebläse (3), das in dem Zuluftpfad bereitgestellt ist, und einen Wärmetauscher (2), der an einer Kreuzung zwischen dem Abluftpfad und dem Zuluftpfad bereitgestellt ist, um einen Wärmeaustausch auszuführen, wobei
in das Zuluftgebläse (3) bzw. das Abluftgebläse (4) jeweils ein Motor (305, 405) eingebaut ist, von dem eine Außenhaut mit einem Gehäuse derselben Form abgedeckt ist, und die so angeordnet sind, dass Drehwellen der jeweiligen Motoren parallel zueinander verlaufen und entgegengesetzten Richtungen zugewandt sind, und ein Teil eines Außenumfangs der Gehäuse den Abluftpfad bzw. den Zuluftpfad bildet,
wobei das Gehäuse für das Abluftgebläse (4) und das Gehäuse für das Zuluftgebläse (3) jeweils in ein erstes Gehäuse (301, 401) und ein zweites Gehäuse (302, 402) in einer ersten Richtung (einer Richtung der Drehwelle) an einer Teilungsoberfläche rechtwinklig zu der Drehwelle des Motors geteilt sind,
wobei das erste Gehäuse (401) für das Abluftgebläse (4) und das erste Gehäuse (301) für das Zuluftgebläse (3) dieselbe Form haben und Gleiches gilt für das zweite Gehäuse (402) für das Abluftgebläse (4) und das zweite Gehäuse (302) für das Zuluftgebläse (3),
**dadurch gekennzeichnet, dass**
das zweite Gehäuse (402) für das Abluftgebläse (4) und das zweite Gehäuse (302) für das Zuluftgebläse (3) jeweils mit einem Vorsprung (302a, 402a) versehen sind, der sich von einer geteilten Öffnungskante entlang der Teilungsoberfläche nach außen erstreckt, und
der an dem zweiten Gehäuse (302) für das Zuluftgebläse (3) bereitgestellte Vorsprung (302a) und der an dem zweiten Gehäuse (402) für das Abluftgebläse (4) bereitgestellte Vorsprung (402a) einander überlagern, wobei Hauptoberflächen, die sich einander in der ersten Richtung gegenüberliegen, miteinander in Oberflächenkontakt befinden, um den Zuluftpfad und den Abluftpfad zu trennen.

2. Wärmetauscherventilator nach Anspruch 1, wobei
ein zweiter Vorsprung (301h, 401h), der sich von der geteilten Öffnungskante entlang der Teilungsoberfläche nach außen erstreckt, jeweils an dem ersten Gehäuse (401) für das Abluftgebläse (4) und dem ersten Gehäuse (301) für das Zuluftgebläse (3) bereitgestellt ist,
die zweiten Vorsprünge (301h, 401h), die an den ersten Gehäusen (301, 401) des Abluftgebläses (4) und des Zuluftgebläses (3) bereitgestellt sind, und die Vorsprünge (302a, 402a), die an den zweiten Gehäusen (302, 402) davon bereitgestellt sind, einander überlagern, wobei Hauptoberflächen, die sich einander in der ersten Richtung gegenüberliegen, miteinander in Oberflächenkontakt befinden,
die Vorsprünge (302a, 402a), die an den zweiten Gehäusen (302, 402) des Abluftgebläses (4) und des Zuluftgebläses (3) bereitgestellt sind, sich weiter als die an den ersten Gehäusen (301, 401) bereitgestellten zweiten Vorsprünge (301h, 401h) nach außen erstrecken und vorstehen, und
der an dem zweiten Gehäuse (302) für das Zuluftgebläse (3) bereitgestellte Vorsprung (302a) und der an dem zweiten Gehäuse (402) für das Abluftgebläse (4) bereitgestellte Vorsprung (402a) einander überlagern, wobei die Hauptoberflächen in dem sich nach außen erstreckenden und vorstehenden Abschnitt sich miteinander in Oberflächenkontakt befinden.

3. Wärmetauscherventilator nach Anspruch 2, wobei
der an dem ersten Gehäuse (301) für das Zuluftgebläse (3) bereitgestellte zweite Vorsprung (301h) und der an dem zweiten Gehäuse (402) für das Abluftgebläse (4) bereitgestellte Vorsprung (402a) mit einem ersten Abstand in einer Richtung einer Teilungsoberfläche aneinander angrenzen, und ein Vorsprung (302b), der auf der Hauptoberfläche des an dem zweiten Gehäuse (302) für das Zuluftgebläse (3) bereitgestellten Vorsprungs (302a) bereitgestellt ist, an dem ersten Abstand befestigt ist, und
der an dem ersten Gehäuse (401) für das Abluftgebläse (4) bereitgestellte zweite Vorsprung (401h) und der an dem zweiten Gehäuse (302) für das Zuluftgebläse (3) bereitgestellte Vorsprung (302a) mit einem zweiten Abstand in der Richtung der Teilungsoberfläche aneinander angrenzen, und ein Vorsprung (402b), der auf der Hauptoberfläche des an dem zweiten Gehäuse (402) für das Abluftgebläse (4) bereitgestellten Vorsprungs (402a) bereitgestellt ist, an dem zweiten Abstand befestigt ist.

4. Wärmetauscherventilator nach Anspruch 1, wobei
das Zuluftgebläse (3) und das Abluftgebläse (4) jeweils Gebläse sind, die einen zylindrischen Flügel eines Mehrflügelgebläses an der Drehwelle des Motors aufweisen, und
das erste Gehäuse (301, 401) ein Motorgehäuse ist, auf dem eine Befestigungsstruktur des Motors bereitgestellt ist, und das zweite Gehäuse (302, 402) ein Sauggehäuse ist, wobei auf der Flügelseite ein Luftansauganschluss ausgebildet ist.

5. Wärmetauscherventilator nach Anspruch 1, wobei
eine erste Rippe (401a, 302c), die im Wesentlichen über die gesamte Länge vorragt, um 45 Grad geneigt an Enden des ersten Gehäuses (401) für das Abluftgebläse (4) und des zweiten Gehäuses (302) für das Zuluftgebläse (3) auf der Wärmetauscherseite ausgebildet ist,
eine zweite Rippe (402c, 301a), die im Wesentlichen über die gesamte Länge vorragt, ausgebildet ist, die um 45 Grad geneigt an den Enden des zweiten Gehäuses (402) für das Abluftgebläse (4) und des ersten Gehäuses (301) für das Zuluftgebläse (3) auf der Wärmetauscherseite ist, und sich in Bezug auf die erste Rippe (401a, 302c) um 90 Grad öffnet, und
das Abluftgebläse (4) und das Zuluftgebläse (3) eine Seite des Wärmetauschers stützen, die im Wesentlichen in einem rechtwinkligen Festkörper ausgebildet ist, indem sie die Seite zwischen der ersten Rippe (401a, 302c) und der zweiten Rippe (402c, 301a) anordnen.

## Revendications

1. Ventilateur d'échange de chaleur comprenant une trajectoire d'air d'échappement pour évacuer l'air intérieur à l'extérieur d'une pièce et une trajectoire d'air d'alimentation pour fournir l'air extérieur à la pièce, qui sont formées dans un boîtier de corps principal en forme de boîte (1), un ventilateur d'échappement (4) prévu dans la trajectoire d'air d'échappement, un ventilateur d'alimentation en air (3) prévu dans la trajectoire d'air d'alimentation, et un échangeur de chaleur (2) prévu à un croisement entre la trajectoire d'air d'échappement et la trajectoire d'air d'alimentation pour réaliser l'échange de chaleur, dans lequel :
le ventilateur d'alimentation en air (3) et le ventilateur d'échappement (4) ont respectivement un moteur (305, 405) installé à l'intérieur de ces derniers, leur coque externe étant recouverte avec un boîtier ayant la même forme, et sont agencés de sorte que les arbres de rotation des moteurs respectifs soient parallèles entre eux et soient orientés dans des direction opposées, et une partie d'une circonférence externe des boitiers forme respectivement la trajectoire d'air d'échappement et la trajectoire d'air d'alimentation,
le boîtier pour le ventilateur d'échappement (4) et le boîtier pour le ventilateur d'alimentation en air (3) sont respectivement divisés en un premier boîtier (301, 401) et en un second boîtier (302, 402) dans une première direction (une direction de l'arbre de rotation) sur la surface de division orthogonale par apport à l'arbre de rotation du moteur,
le premier boîtier (401) pour le ventilateur d'échappement (4) et le premier boîtier (301) pour le ventilateur d'alimentation en air (3) ont la même forme et il en va de même pour le second boîtier (402) pour le ventilateur d'échappement (4) et le second boîtier (302) pour le ventilateur d'alimentation en air (3),
**caractérisé en ce que** :
le second boîtier (402) pour le ventilateur d'échappement (4) et le second boîtier (302) pour le ventilateur d'alimentation en air (3) sont respectivement prévus avec une saillie (302a, 402a) s'étendant vers l'extérieur à partir d'un bord d'ouverture divisé le long de la surface de division, et
la saillie (302a) prévue sur le second boîtier (302) pour le ventilateur d'alimentation en air (3) et la saillie (402a) prévue sur le second boîtier (402) pour le ventilateur d'échappement (4) sont superposées avec des surfaces principales opposées entre elles dans la première direction en contact de surface entre elles, afin de séparer la trajectoire d'air d'alimentation et la trajectoire d'air d'échappement.

2. Ventilateur d'échange de chaleur selon la revendication 1, dans lequel :
une seconde saillie (301h, 401h), s'étendant vers l'extérieur à partir du bord d'ouverture divisé le long de la surface de division, est respectivement prévue sur le premier boîtier (401) pour le ventilateur d'échappement (4) et sur le premier boîtier (301) pour le ventilateur d'alimentation en air (3),
les secondes saillies (301h, 401h) prévues sur les premiers boitiers (301, 401) du ventilateur d'échappement (4) et du ventilateur d'alimentation en air (3) et les saillies (302a, 402a) prévues sur leurs seconds boitiers (302, 402) sont superposées avec les surfaces principales opposées entre elles dans la première direction en contact de surface entre elles,
les saillies (302a, 402a) prévues sur les seconds boitiers (302, 402) du ventilateur d'échappement (4) et le ventilateur d'alimentation en air (3) s'étendent et font saillie davantage vers l'extérieur que les secondes saillies (301h, 401h) prévues sur les premiers boitiers (301, 401), et
la saillie (302a) prévue sur le second boîtier (302) pour le ventilateur d'alimentation en air (3) et la saillie (402a) prévue sur le second boîtier (402) pour le ventilateur d'échappement (4) sont superposées avec les surfaces principales en contact de surface entre elles dans la partie s'étendant et faisant saillie vers l'extérieur.

3. Ventilateur d'échange de chaleur selon la revendication 2, dans lequel :
la seconde saillie (301h) prévue sur le premier boîtier (301) pour le ventilateur d'alimentation en air (3) et la saillie (402a) prévue sur le second boîtier (402) pour le ventilateur d'échappement (4) viennent en butée l'une contre l'autre avec un premier jeu dans une direction d'une surface de division, et une saillie (302b) prévue sur la surface principale de la saillie (302a) prévue sur le second boîtier (302) pour le ventilateur d'alimentation en air (3) est montée sur le premier jeu, et
la seconde saillie (401h) prévue sur le premier boîtier (401) pour le ventilateur d'échappement (4) et la saillie (302a) prévue sur le second boîtier (302) pour le ventilateur d'alimentation en air (3) viennent en butée l'une contre l'autre avec un second jeu dans la direction de la surface de division, et une saillie (402b) prévue sur la surface principale de la saillie (402a) prévue sur le second boîtier (402) pour le ventilateur d'échappement (4) est montée sur le second jeu.

4. Ventilateur d'échange de chaleur selon la revendication 1, dans lequel :
le ventilateur d'alimentation en air (3) et le ventilateur d'échappement (4) sont respectivement un ventilateur ayant une aube cylindrique d'un ventilateur à plusieurs aubes sur l'arbre de rotation du moteur, et
le premier boîtier (301, 401) est un boîtier de moteur sur lequel une structure de fixation du moteur est prévue, et le second boîtier (302, 402) est un boîtier d'aspiration avec un orifice d'aspiration d'air formé du côté de l'aube.

5. Ventilateur d'échange de chaleur selon la revendication 1, dans lequel :
une première nervure (401a, 302c), faisant sensiblement saillie sur toute la longueur, est formée de manière inclinée à 45 degrés aux extrémités du premier boîtier (401) pour le ventilateur d'échappement (4) et du second boîtier (302) pour le ventilateur d'alimentation en air (3) du côté de l'échangeur de chaleur,
une seconde nervure (402c, 301a), faisant sensiblement saillie sur toute la longueur, est formée de manière inclinée à 45 degrés aux extrémités du second boîtier (402) pour le ventilateur d'échappement (4) et du premier boîtier (301) pour le ventilateur d'alimentation en air (3) du côté de l'échangeur de chaleur, et s'ouvre à 90 degrés par rapport à la première nervure (401a, 302c), et
le ventilateur d'échappement (4) et le ventilateur d'alimentation en air (3) supportent un côté de l'échangeur de chaleur formé sensiblement en un solide rectangulaire en prenant en sandwich le côté entre la première nervure (401a, 302c) et la seconde nervure (402c, 301a).
